(19) Europäisches Patentamt

European Patent Office

Office européen des brevets

(11) **EP 1 323 949 B1**

(12) **EUROPEAN PATENT SPECIFICATION**

(45) Date of publication and mention
of the grant of the patent:
**05.07.2006 Bulletin 2006/27**

(51) Int Cl.:
***F16H 7/08*** (2006.01)

(21) Application number: **02258823.0**

(22) Date of filing: **23.12.2002**

(54) **Hydraulic tensioner with stop mechanism**

Hydraulische Spannvorrichtung mit Halte-Mechanismus

Tendeur hydraulique avec un mécanisme d'arreté

(84) Designated Contracting States:
**DE FR IT**

(30) Priority: **27.12.2001 JP 2001395974**
**28.12.2001 JP 2001400353**
**23.04.2002 JP 2002120627**

(43) Date of publication of application:
**02.07.2003 Bulletin 2003/27**

(73) Proprietor: **BorgWarner Morse TEC Japan K.K.**
**Nabari,**
**Mie 518-0495 (JP)**

(72) Inventors:
 • **Takeda, Hiroyuki,**
 **c/o BorgWarner Morse**
 **Mie 518-0495 (JP)**
 • **Horikawa, Yasuo,**
 **c/o BorgWarner Morse**
 **Mie 518-0495 (JP)**
 • **Okazaki, Toru,**
 **c/o BorgWarner Morse**
 **Mie 518-0495 (JP)**
 • **Mitsuhasi, Hiroyoshi,**
 **c/o BorgWarner Morse**
 **Mie 518-0495 (JP)**
 • **Tsuruta, Shinji,**
 **c/o BorgWarner Morse**
 **Mie 518-0495 (JP)**
 • **Fukuzawa, Takashi,**
 **c/o BorgWarner Morse**
 **Mie 518-0495 (JP)**

(74) Representative: **Lerwill, John et al**
**A.A. Thornton & Co.**
**235 High Holborn**
**London, WC1V 7LE (GB)**

(56) References cited:
**EP-A- 1 030 078**          **EP-A- 1 070 875**
**EP-A- 1 096 174**          **DE-A- 4 327 314**
**DE-A- 10 014 700**        **DE-C- 19 714 763**
**US-A- 5 425 680**

## Description

BACKGROUND OF THE INVENTION

FIELD OF THE INVENTION

The present invention relates to a tensioner for an endless chain power transmission system. More particularly, to a chain tensioner system with a blade tensioner for imparting tension to a chain that drivingly connects a driven shaft to a driving shaft, corresponding to the preamble of claim 1.

DESCRIPTION OF RELATED ART

In an automotive engine, a blade-type tensioner has been used as a tensioner to impart tensioning force to an engine timing chain or a drive chain for an auxiliary such as an oil pump and the like. A blade-type tensioner is comprised of a blade shoe having an arcuately curved chain sliding surface and a leaf-spring-shaped blade spring provided on the opposite side of the chain sliding surface of the blade shoe to apply a spring force to the blade shoe. A proximal end portion of the blade shoe is rotatably supported around a supporting shaft inserted thereinto. A distal end portion of the blade shoe is slidably supported on a supporting surface provided discretely from the blade shoe.

In operation, a chain slides and travels along the chain sliding face of the blade shoe. During this time, a resilient force due to an elastic deformation of the blade shoe and the blade spring is applied to the chain through the blade shoe and tension in the chain is maintained. When the chain slacks during operation, a blade spring, which has been elastically deformed to a greater radius of curvature, deforms to a smaller radius of curvature. A blade shoe thus protrudes towards the chain, thereby maintaining a constant tension in the chain.

When resonance occurs with the blade-type tensioner an adequate compressive force may not be applied to the chain by the tensioner, thereby causing tooth jumping of the chain. Tooth jumping will change the relative timing of the driving and driven shafts, and in some engines could cause valve damage or retard the ignition timing of the engine. Therefore, there is a need to prevent the blade tensioner from causing resonance in the normal rotational speed of the engine. In order to prevent resonance, the resonant frequency of the blade tensioner may be made higher than the usual rotational speed of the engine by enlarging the spring rate of the blade spring.

In a conventional blade tensioner however, when enlarging the spring rate by increasing the number of the blade springs or increasing the thickness of each blade spring, difficulties arise in assembling the blade spring in to the blade shoe. Therefore, in a prior art blade tensioner, it is not easy to improve the spring properties.

Furthermore, a chain needs maintenance due to an increased elongation during prolonged use of the chain. Parts around the engine head such as the camshaft, rocker arm, valve spring, and valve also need maintenance. In order to perform proper maintenance, a chain needs to be uninstalled from the engine. However, when the blade tensioner is in an installed state the blade shoe presses against a chain. Therefore, in maintenance, the blade shoe should be moved to and maintained at a position away from the chain, which makes chain-changing work troublesome. In a blade-type tensioner used as an engine timing chain, chain-changing work is especially laborious because the center distance of the engine timing chain is typically longer and an elastic force of a blade spring is greater as compared to a chain for an engine auxiliary unit. Therefore, a tensioner that can easily maintain the blade shoe at a position away from the chain during maintenance, such as chain changing is needed.

A known blade tensioner system disclosed in the closest prior art document EP-A-1030078 includes a blade shoe and a leaf-spring-shaped blade spring. The blade shoe is formed of a shoe body with an arcuately curved chain sliding surface, a proximal end portion provided on a proximal side of the shoe body, and a distal end portion provided on a distal end side of the shoe body. The blade spring is disposed on the opposite side of the chain sliding surface of the blade shoe so as to impart a compressive force to the chain through the blade shoe. The proximal end portion of the blade shoe is rotatable around a supporting shaft inserted thereinto.

The blade tensioner is installed into the engine in a setting state. When the chain tension is increased, the distal end portion of the blade shoe is slidably supported on a supporting face provided in the engine, the distal end portion of the blade shoe having a curved convex surface adapted to contact the supporting face.

The present invention provides such a blade-type tension system wherein a first supporting face and a second supporting face are provided in the engine with the circular, convex surface of the blade shoe being slidably supported on the first or second supporting face, the second supporting face being non-planar with the first supporting face and the second supporting face either intersecting the first supporting face at an obtuse angle or having a circular, concave surface that is continuous with the first supporting face, such that the circular, convex surface of the distal end portion contacts the second supporting face when tension in the chain is increased.

When the chain tension increases from the setting state such that the distal end portion of the blade shoe is in contact with both the first and the second supporting faces, a sliding movement of the distal end portion the blade shoe on one supporting face is restricted by the other supporting face, thereby generating a resistant force relative to the elastic deformation of the blade shoe and the blade spring.

Thereby, in the case of an increased center distance of the blade tensioner during operation under elevated temperatures or at the time of resonance of the blade tensioner, the chain tension increases and the compressive force of the chain towards the blade tensioner increases, such that the deformation resistance of the whole blade tensioner can be enlarged and thus, spring properties of the blade tensioner may be improved.

When the chain tension decreases, the compressive force that is applied by the chain to the blade tensioner decreases, the blade shoe elastically deforms toward its original position and the arcuately curved convex surface of the distal end portion of the blade shoe travels toward the first supporting surface. At this time, the blade spring shows a decrease in deformation, as compared to where the surface of the distal end portion of the blade shoe is still supported by the second supporting surface after elastic deformation toward its original position. The decrease in the resilient force of the blade spring is smaller relative to the returning deformation of the blade spring.

The present invention also includes a stop mechanism which locates the chain sliding face of the blade shoe at a position a predetermined space away from the chain during maintenance so that the blade shoe is maintained in an extended state. The stop mechanism may be a notch formed on a slide surface and stop member that has an end portion releasably engageable with the notch and the distal end portion protruding from the slide surface contacting the distal end portion of the blade shoe formed of a flat stop plate. The stop mechanism may also be a round stop pin or a pin aperture formed integrally with either of the engagement grooves for the blade spring, which are formed on the proximal and a distal end portions of the blade shoe, with a pin adapted to engage with the pin aperture, a pin on the engine side adapted to protrude toward the distal end portion of the blade shoe, an inclined surface formed on a side surface of the distal end portion of the blade shoe inclining in such a manner that the distal end of the pin presses against the inclined surface as the blade shoe deforms to an extended state, and an engagement portion formed at a terminal end of the inclined surface adapted to engage with the distal end of the pin. The stop mechanism may also comprise a protrusion formed on a side surface of the distal end portion of the blade shoe, an inclined surface formed on the engine side inclined in such a manner that the protrusion of the blade shoe presses against the inclined surface as the blade shoe and deforms towards its extended state, and an engagement portion formed at a terminal end of the inclined surface adapted to engage the protrusion of the blade shoe. The stop mechanism may also contain a first pin aperture formed on a side surface of the distal end portion of the blade shoe, a second pin aperture formed on a side wall of a sliding face, and a U-shaped stop pin each end of which is engageable with the first pin aperture or second pin aperture.

In one embodiment, the first and second supporting faces are flat surfaces that intersecting each other at an obtuse angle, and the distal end portion of the blade shoe has a first, arcuate convex portion contacting the first supporting face and a second, arcuate convex portion contacting the second supporting face. Thereby, when a force of the chain is applied to the blade tensioner, it is possible to prevent the first and second supporting face from excessively hindering the deformation of the blade shoe and blade spring. The first and second convex portion of the distal end portion of the blade shoe may be composed of the same arc.

In another embodiment the second supporting surface is a concavely circular arc that is continuous with the first supporting surface, or a flat surface that is continuous with the first supporting surface through a concavely circular arc that extends in a direction intersecting the first supporting surface. The distal end portion of the blade shoe has a convexly circular arc that contacts either the first or second supporting surface, and is slidably supported by either the first or second supporting surface in the engine.

In a third embodiment, the first supporting surface may be a circular, convex surface. When the chain elongates during operation in this embodiment, the vertical resistance force applied from the first supporting surface to the distal end portion of the blade shoe is enlarged, thereby improving a damping performance relative to the chain.

According to a fourth embodiment, the blade tensioner is installed into an engine in a setting state, and a contact point between the circular, convex surface of the distal end portion of the blade shoe and the first supporting surface is located at an inflection point between the circular, convex surface of the first supporting surface and the circular, concave surface of the second supporting surface.

The term "continuous" means to be mathematically continuous. That is, there are no discontinuities such as stepped portions or the like between the first and second supporting surfaces, and the first and second supporting surfaces are smoothly connected to each other. The term circular meaning a segment of a circle.

The blade tensioner of the present invention may be applied to a camshaft timing system of an engine, where the drive shaft is a crankshaft and the driven shaft is a camshaft or an auxiliary drive system of an engine, where the drive shaft is a crankshaft and the driven shaft is an auxiliary drive shaft.

BRIEF DESCRIPTION OF THE DRAWING

Fig. 1    shows a schematic side view of the an engine camshaft timing system incorporating a blade tensioner according to an embodiment of the present invention, showing a set position immediately after the blade tensioner has been installed into an engine.

Fig. 2    shows is a schematic of an engine camshaft timing system, showing a setting state immediately after a blade tensioner according to an embodiment of the present invention is installed into an engine.

Fig. 3    shows is a schematic of an engine camshaft timing system, showing a state where the chain is increased from the setting state of Figure 2.

Fig. 4    shows an enlarged view of a portion of Figure 1.

Fig. 5    shows a schematic view of an engine camshaft timing system incorporating a blade tensioner according an embodiment of the present invention, showing a state where tension in the chain has been increased form the state of the set position of Figure 1.

Fig. 6    shows an enlarged view of a portion of Figure 5.

Fig. 7    shows an alternative embodiment of the present invention, corresponding to figures 4 and 6.

Fig. 8    shows another alternative embodiment of the present invention, corresponding to figures 4 and 6.

Fig. 9    shows the equilibrium of forces at each contact point between the distal end portion of the blade shoe and the supporting surface of prior art in the case when the chain has elongated from the set position of figure 1.

Fig. 10    shows the equilibrium of forces at each contact point between the distal end portion of the blade shoe and the first supporting surface in the case when the chain has elongated from the set position of figure 1.

Fig. 11.    shows a stop mechanism with the distal end portion of a blade shoe.

Fig. 12    shows a stop mechanism with the distal end portion of a blade shoe.

Fig. 13    shows a stop mechanism with a distal end portion of a blade shoe including a pin.

Fig. 14    shows a stop mechanism with a distal end portion of a blade shoe including a pin.

Fig. 15    shows a stop mechanism with a distal end portion of a blade shoe viewed from the chain sliding face.

Fig. 16    shows a stop mechanism with a distal end portion of a blade shoe viewed from the chain sliding face.

Fig. 17    shows a stop mechanism with a distal end portion of a blade shoe viewed from the camshaft side.

Fig. 18    shows a stop mechanism with a distal end portion of a blade shoe viewed from the arrow marked IX in Figure 17.

DETAILED DESCRIPTION OF THE INVENTION

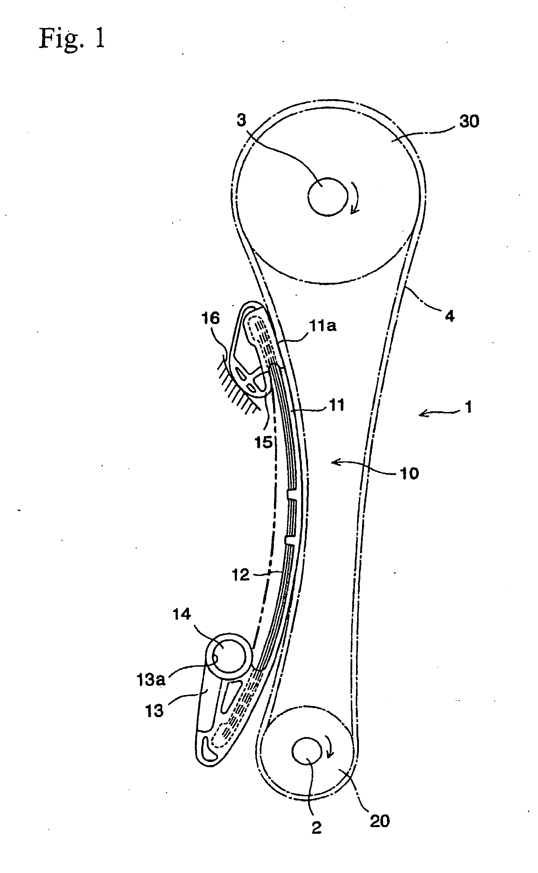

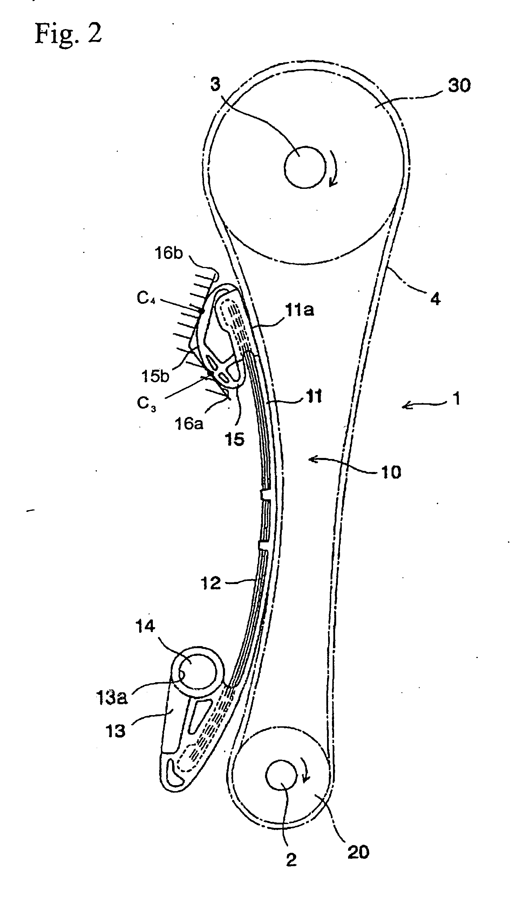

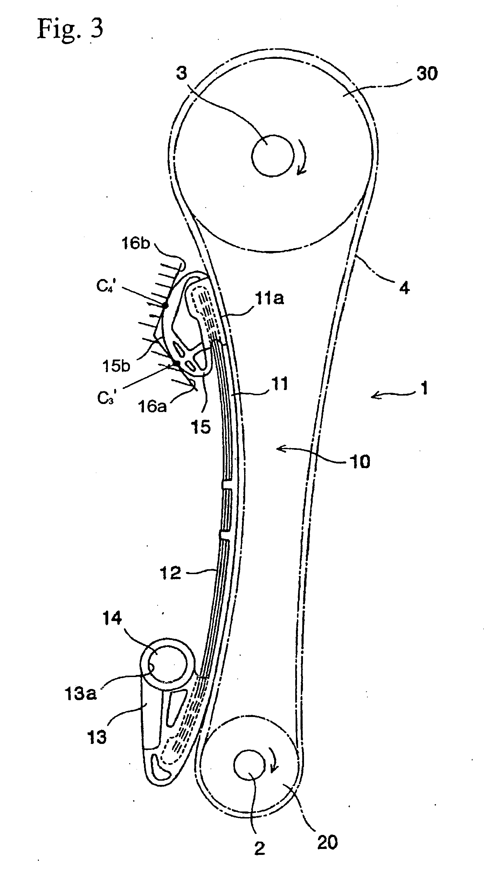

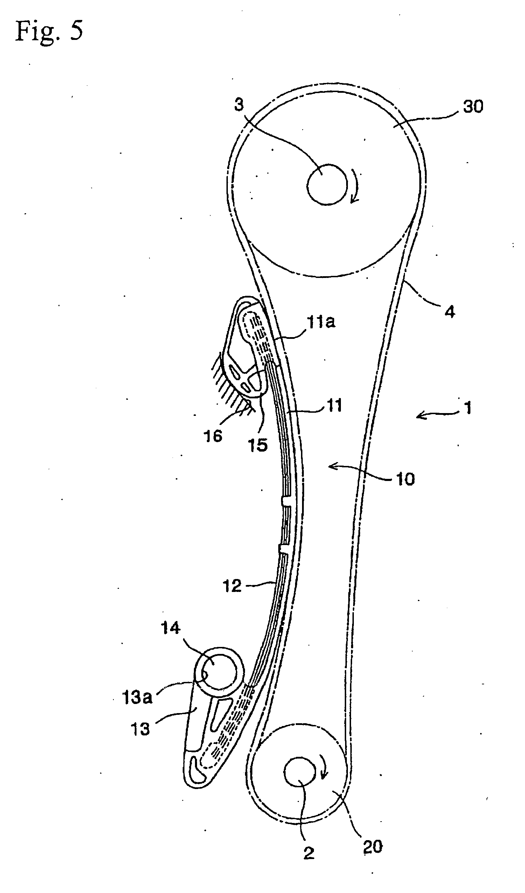

Figures 1-3, 5, and 11 show an engine camshaft timing system incorporating a blade-type tensioner according to an embodiment of the present invention. Figures 1 and 2 illustrate the setting position immediately after a blade-type tensioner has been installed into an engine, and figures 3 and 5 illustrate the state where chain tension has been increased from the setting position in figure 1.

As shown in figures 1-3, 5, and 11, a camshaft timing system 1 is comprised of a crank sprocket 20 mounted onto a crankshaft (or a drive shaft) 2, a cam sprocket 30 mounted onto a camshaft (or a driven shaft) 3, and a timing chain 4 wrapped around these sprockets 20, 30 to transmit power of the crankshaft 2 to the camshaft 3. In the drawings, arrow marks indicate directions of rotation of the crankshaft 2 and the camshaft 3, respectively.

On the slack side of the timing chain 4, a blade-type tensioner 10 is provided. The blade tensioner 10 includes an arcuately curved, plastic blade shoe 11, and a plurality of leaf-shaped blade springs 12 provided and laminated on the back side of the chain sliding surface 11a of the blade shoe 11 so as to impart tension to the chain 4 via the blade shoe 11.

The proximal end portion 13 of the blade shoe 11 has a pivot hole 13a into which a shoulder bolt (or a supporting shaft) 14 is inserted. The shoulder bolt 14 is fitted into a threaded hole formed in an engine cylinder block (not shown), making the blade shoe 11 rotatable around the shoulder bolt 14.

In one embodiment, the distal end portion 15 of the blade shoe 11 is contacted by and slidable on first and second supporting faces 16a, 16b provided in the engine. Each of the supporting faces 16a, 16b are flat faces as shown in figures 2 and 3. The distal end portion 15 of the blade shoe 11 has an arcuate convex surface 15b that contacts each of the supporting faces 16a, 16b at points $C_3$, $C_4$ respectively. Each of supporting faces 16a, 16b intersect and form an obtuse angle. The obtuse angle formed between the first and second supporting face 16a, 16b is a result of the distal end portion 15 of the blade shoe 11 sliding along the first supporting face 16a, preventing the second supporting face 16b from excessively hindering the sliding movement of the distal end portion 15 of the blade shoe 11 and thus, hindering deformation of the blade shoe 11 and the blade spring 12.

From the setting state shown in figure 2, as tension in the chain increases due to resonant oscillation of the blade tensioner or elongation of the center distance owing to heat expansion and the compressive force of the chain relative to the blade tensioner 10 increases, the blade tensioner 10 deforms in such a way that radii of the blade shoe 11 and the blade spring 12 become greater. At this time, the proximal end portion 13 of the blade shoe 11 rotates around the shoulder bolt 14, and the distal end portion 15 of the blade shoe 11 slides upwardly along each supporting face 16a, 16b. By this sliding movement, each contact point between the distal end portion 15 of the blade shoe 11 and the supporting face 16a, 16b travels from the contact points $C_3$, $C_4$ to contact points $C_3'$, $C_4'$ as shown in figure 3, but the amount of the travel of the contact points is very small. In this case, the supporting face 16b restricts an upwardly sliding movement of the distal end portion 15 of the blade shoe 11 along the supporting face. Such a restriction on a smooth sliding movement of the distal end portion 15 of the blade shoe 11 causes a resistant force relative to the elastic deformation of the blade shoe 11 and blade spring 12. In such a manner, deformation resistance of the entire blade tensioner becomes greater and thus, spring properties of the blade tensioner can be improved. In this case, by simply providing the second supporting face 16b in addition to the first supporting face 16a, improvement of the spring properties of the blade tensioner can be conducted with ease.

Furthermore, in the above-mentioned embodiment, the distal end portion 15 of the blade shoe 11 is formed of a single arc, but the present invention is not limited to this embodiment. The distal end portion 15 of the blade shoe 11 may be formed with different arcs each corresponding to the contact points $C_3$, $C_4$.

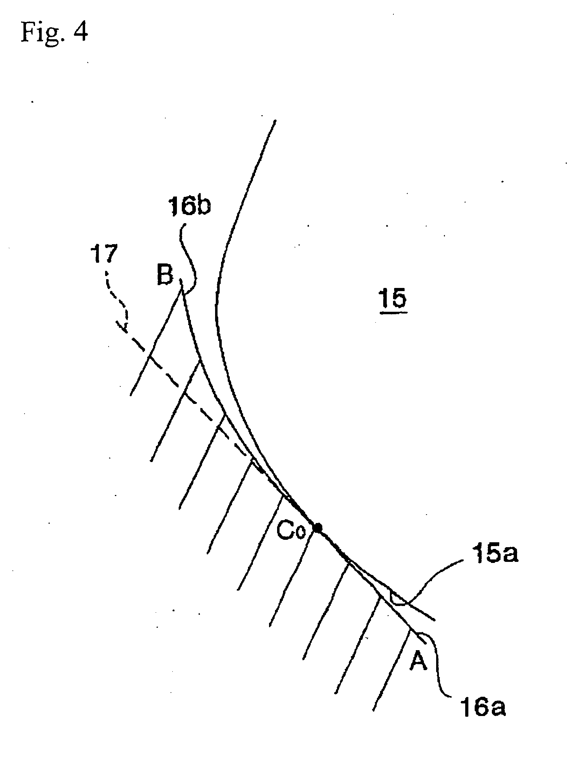

In another embodiment, as shown in figure 4, an enlarged view of a portion of figure 1, a circular, convex surface 15a comprising the distal end portion 15 of the blade shoe 11 is in contact with the supporting surface 16 at point $C_0$. A surface AB, which composes the supporting surface 16 is formed of a first supporting surface 16a linearly extending through a line segment $AC_0$ and a concavely circular, second supporting surface 16b that extends from point $C_0$ to point B and is continuous with the first supporting surface 16a. Here the term circular means a segment of a circle. In addition, broken line 17 indicates a supporting surface of prior art, which extends linearly from point $C_0$ along an extended line of the first supporting surface 16a. Here, the term "continuous" means to be mathematically continuous. That is, there are no discontinuities such as stepped portions or the like between the first and second supporting surfaces 16a, 16b, and the first and second supporting surfaces 16a, 16b are smoothly connected to each other.

From the state shown in figure 1, the tension in the chain increases due to the resonance of the blade tensioner or an elongation of the center distance due to thermal expansion, as a result, the compressive force of the chain on the blade tensioner 10 increases. As a result, as shown in figure 5, the blade tensioner 10 deforms in such a manner as to enlarge its radius of curvature. At this time, the proximal end portion 13 of the blade shoe 11 rotates around the shoulder bolt 14 and the distal end portion 15 of the blade shoe 11 slides upwardly along the supporting surface 16.

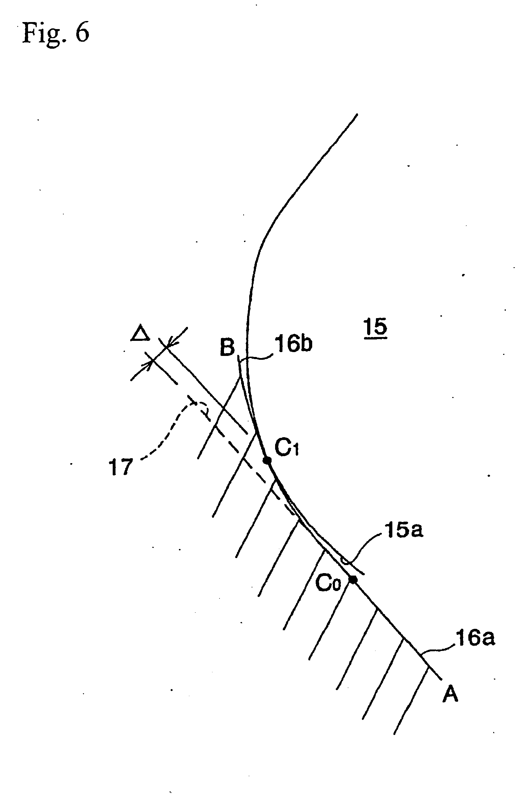

As shown in figure 6, an enlarged view of a portion of figure 5, the circular, convex surface 15a of the distal end portion 15 of the blade shoe 11 is in contact with point $C_1$ on the second supporting surface 16b. In figure 4, the distance between point $C_1$ and the supporting surface 17 of the prior art is designated $\Delta$. In this embodiment, the amount of deflection of the blade shoe, and the amount the blade spring is increased by $\Delta$, as compared with the state supported on the supporting surface 17 of the prior art. Thus, the resilient force of the blade spring is made greater, thereby improving spring properties of the blade tensioner. In this case, since the improvement in spring properties is achieved by simply altering the shape of the supporting surface, the spring properties can be improved with ease.

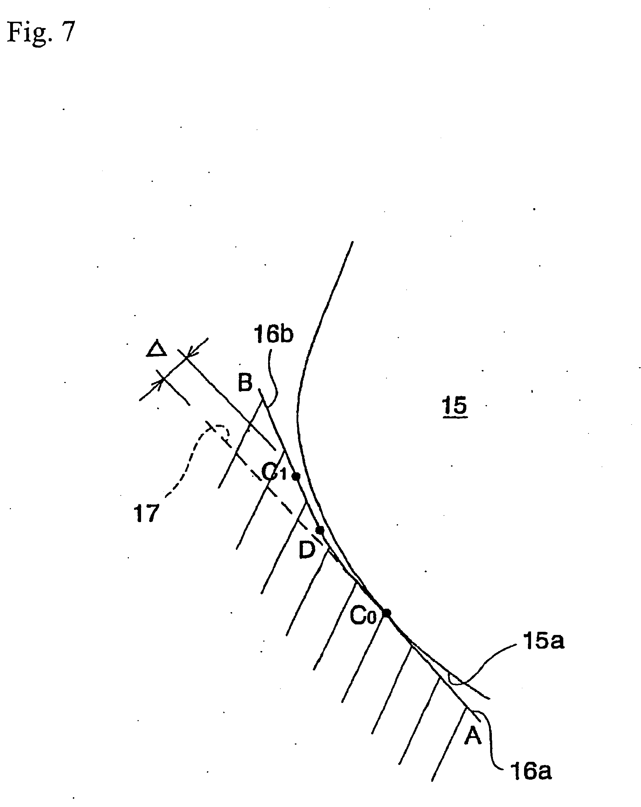

Referring to figure 7, in an alternative embodiment, the surface AB composing the supporting surface 16 is formed of a first supporting surface 16a extending linearly between point A and point $C_0$, the circular, concave surface that extends between point $C_0$ and point D is continuous with the first supporting surface 16a, and a flat surface that extends linearly between point D and point B that is continuous with the circular, concave surface. A second supporting surface 16b is formed of a circular, concave surface that is continuous with the first supporting surface 16a, and a flat surface that is continuous with this circular, concave surface. The circular, convex surface 15a of the distal end portion 15 of the blade shoe 11 is in contact with the supporting surface 16 at point $C_0$.

As tension in the chain increases, a contact point of the distal end portion 15 of the blade shoe is transferred from point $C_0$ on the first supporting surface 16a through a circular, concave surface between points $C_0$ and D to point C on the second supporting surface. The amount of deflection of the blade shoe and thus, the blade spring is increased by $\Delta$, as compared with the state supported on the supporting surface 17 of the prior art. Thereby, increasing the resilient force of the blade spring.

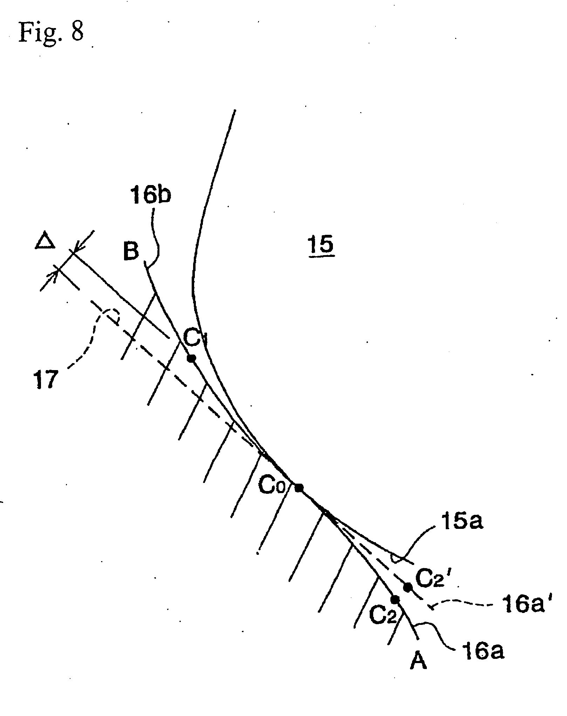

In another alternative embodiment, as shown in figure 8, the surface AB composing a supporting surface 16 is formed of a first supporting surface 16a that is a circular, convex surface between point A and point $C_0$ and the circular, concave surface that extends between

point $C_0$ and point B and is continuous with the first supporting surface 16a. Point $C_0$, in this embodiment is an inflection point on the supporting surface 16 formed of circular, convex and concave surfaces. The circular, convex surface 15a of the distal end portion 15 of the blade shoe 11 is in contact with point $C_0$ on the supporting surface 16.

As tension in the chain increases, a contact point of the distal end portion 15 of the blade shoe on the supporting surface is transferred from point $C_0$ to point $C_1$. Thereby, the amount of deflection of the blade shoe, and thus, the blade spring is increased by $\Delta$, as compared with the supporting surface 17 of the prior art. As a result, the resilient force of the blade spring is increased.

Furthermore, as the chain elongates and the blade shoe slackens, the distal end portion 15 of the blade shoe moves downwardly along the first supporting surface 16a. When the distal end portion 15 of the blade shoe comes into contact with point $C_2$ on the first supporting surface 16a, the frictional force which acts upon the distal end portion 15 of the blade shoe at point $C_2$ is greater than the frictional force acting upon the distal end portion 15 of the blade shoe at point $C'_2$, which is the contact point between the distal end portion 15 of the blade shoe and the flat supporting surface 16a'.

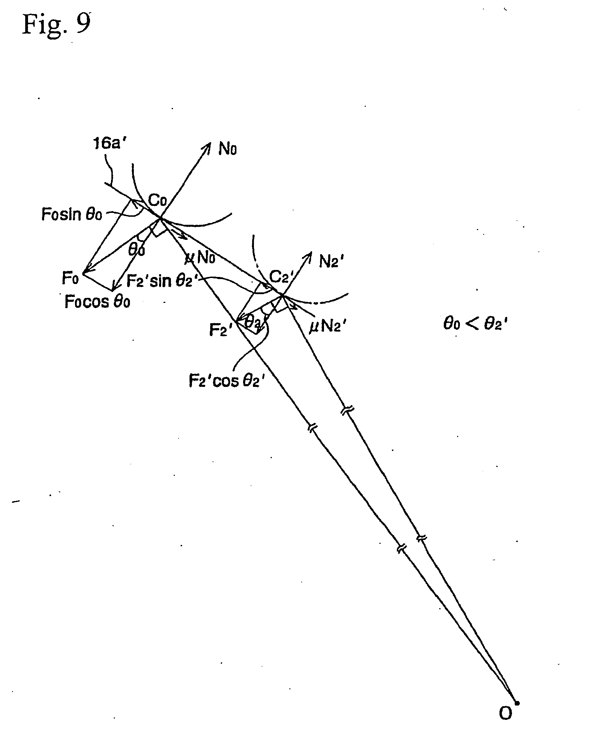

Figure 9 illustrates the equilibrium of forces at points $C_0$, $C_2$' on a flat supporting surface 16a'. As shown in figure 9, compressive forces of the chain on the blade shoe that are imparted as a reaction of compressive forces of the blade shoe on the chain at points $C_0$, $C_2$' on the supporting surface 16a' are designated at $F_0$, $F_2$'. The blade spring, which was elastically deformed toward a greater radius of curvature and stayed at point $C_0$, moves toward a smaller radius of curvature by its restoring force and stays at point $C_2$'. As a result, at point $C_2$', the amount of elastic deformation of the blade spring is decreased and the compressive force of the blade spring to the chain is also decreased. That is,

$$F_0 > F_2' \qquad (1)$$

The compressive force Fo of the chain at point $C_0$ generates a bending moment $M_0$ (= $F_0 \times OC_0$) to cause rotation of the blade shoe around point O. Similarly, the compressive force $F_2$' of the chain at point $C_2$' generates a bending moment $M_2$' (= $F_2$' $\times$ $OC_2$') to cause rotation of the blade shoe around point O. Point O is the center of rotation of the blade shoe, which corresponds to the center of the shoulder bolt 14.

The compressive forces $F_0$, $F_2$' are resolved into two directions: one is a direction parallel to the supporting surface 16a' and the other is a direction perpendicular to the supporting surface 16a'. The angles formed between the direction perpendicular to the supporting surface 16a' and the directions of action of the compressive forces $F_0$, $F_2$' are designated at $\theta_0$, $\theta_2$', respectively.

At point $C_0$, a vertical component of the force $F_0$, or $F_0 \cdot \cos\theta_0$ balances a normal load No on the supporting surface 16a'. A horizontal component of the force $F_0$, or $F_0 \cdot \sin\theta_0$ acts to slide the blade shoe along the supporting surface 16a'. A frictional force $\mu N_0$ ($\mu$: coefficient of friction), or $\mu F_0 \cdot \cos\theta_0$ acts in a direction opposite to the direction of $F_0 \cdot \sin\theta_0$ along the supporting surface 16a'.

Similarly, at point $C_2$', a vertical component of the force $F_2$', or $F_2$'$\cdot \cos\theta_2$' balances a normal load $N_2$' on the supporting surface 16a'. A horizontal component of the force $F_2$', or $F_2$'$\cdot \sin\theta_2$' acts to slide the blade shoe along the supporting surface 16a'. A frictional force $\mu N_2$', or $\mu F_2$'$\cdot \cos\theta_2$' acts in a direction opposite the direction of $F_2$'$\cdot \sin\theta_2$' along the supporting surface 16a'.

Here, $\theta_2' > \theta_0$

$$\cos\theta_2' < \cos\theta_0$$

From inequality (1),

$$F_2' < F_0$$

$$\mu F_2' \cdot \cos\theta_2' < \mu F_0 \cdot \cos\theta_0$$

That is,

$$\text{That is, } \mu N_2' < \mu N_0' \qquad (2)$$

From inequality (2), it is found that the frictional force decreased at point $C_2$', as compared with the frictional force at point $C_0$.

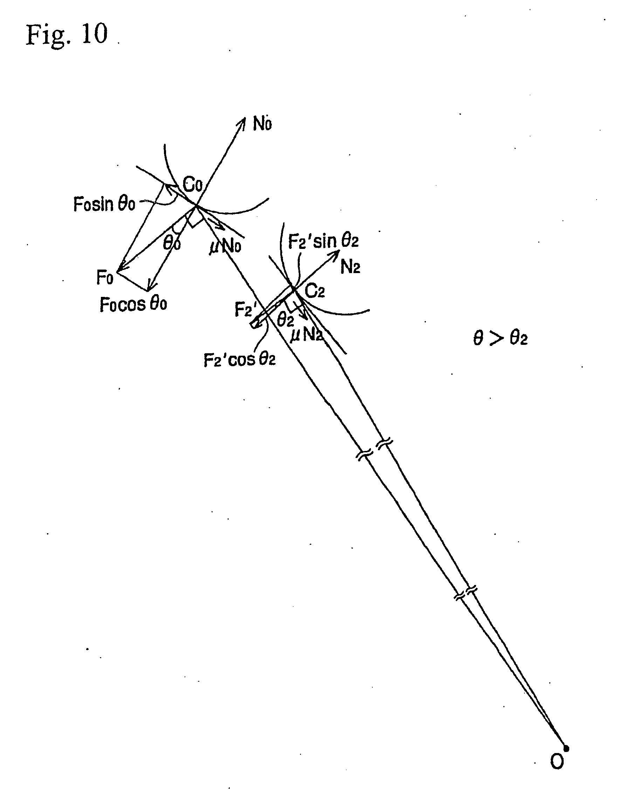

Figure 10 illustrates the equilibrium of forces at points $C_0$, $C_2$ on the first supporting surface 16a. As shown in figure 10, compressive forces of the chain on the blade shoe at points $C_0$, $C_2$ on the first supporting surface 16a are designated at $F_0$, $F_2$', respectively. The compressive forces $F_0$, $F_2$' are resolved into a direction tangential to the supporting surface 16a and the other direction perpendicular to the tangential direction of the supporting surface 16a at points $C_0$, $C_2$, respectively. The angles formed between the direction perpendicular to the supporting surface 16a and the directions of action of the compressive forces $F_0$, $F_2$' are designated at $\theta_0$, $\theta_2$, respectively.

At point $C_0$, a vertical component of the force $F_0$, or $F_0 \cdot \cos\theta_0$ balances a normal load No on the supporting surface 16a. A frictional force $\mu N_0$ ($\mu$: coefficient of friction) acts in a direction opposite the direction of action of the horizontal component of the force $F_0$, or $F_0 \cdot \sin\theta_0$.

At point $C_2$, a vertical component of the force $F_2$', or $F_2$'$\cdot \cos\theta_2$ balances a normal load $N_2$ on the sup-

porting surface 16a. Friction force $\mu N_2$ acts in a direction opposite to the direction of action of $F_2' \cdot \sin\theta_2$. In this case as well,

$$F_2' < F_0 \text{ and } \mu N_2 < \mu N_0$$

Here, $\theta_2 < \theta_0 < \theta_2'$

$$\cos\theta_2' < \cos\theta_2$$

Therefore,

$$\mu F_2' \cdot \cos\theta_2' < \mu F_2' \cdot \cos\theta_2$$

$$\mu N_2' < \mu N_2$$

That is, a frictional force at point $C_2$ is greater than a frictional force at point $C_2'$. In such a way, according to the present invention, even when the chain has elongated, a frictional force acted upon the blade shoe from the supporting surface can be made greater, thereby improving damping performance of the blade tensioner relative to the chain.

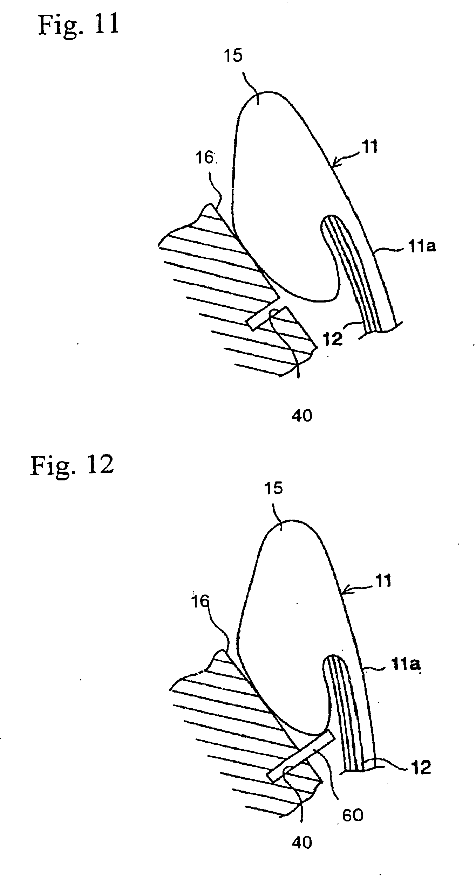

Figures 11 and 12 show a stop mechanism suitable for use with embodiments of the present invention. These drawings correspond to enlarged schematic views of a distal end portion of the blade shoe of figure 1, but, the arrangement as illustrated does not include first and second stop surfaces as provided in embodiments of the invention. A notch 40 is formed on the supporting surface 16 in the engine. An end of the stop member 60, shown in figure 12, is releasably engageable with the notch 40. The stop member 60 may be formed of a flat stop plate or a round stop pin.

During maintenance such as a chain changing, the blade shoe 11 is moved to an extended position shown as a double dotted line in figure 1. The distal end portion 15 of the blade shoe 11 thus travels to a position shown in figure 12 from the position shown in figure 11 along the supporting surface 16. At this time, a resilient force of the blade spring 12 biases the blade shoe 11 to return to the position shown in figure 11. From this state, an end of the stop member 60 is inserted into and engages with the notch 40 on the supporting surface 16. At this time, a portion of the stop member 60 protrudes from the supporting surface 16 and the distal end portion 15 of the blade shoe 11 contacts the stop member 60 protruded from the supporting surface 16. In such a manner, the chain sliding face 11a of the blade shoe 11 may be easily maintained at a position away from the chain with the blade shoe 11 kept at an extended state.

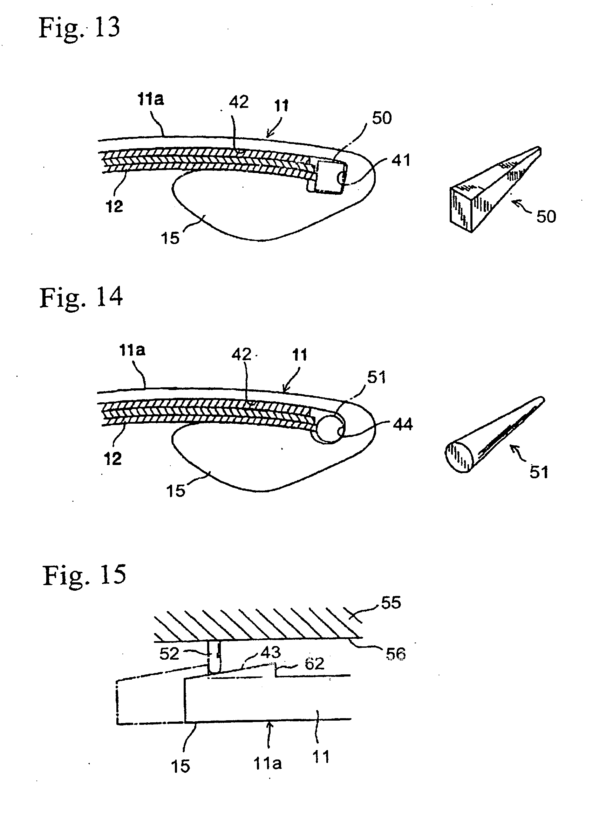

Figures. 13 and 14 show another stop mechanism suitable for embodiments of the present invention. An engagement groove 42 is formed in the distal end portion 15 of the blade shoe 11 to insert the end of the blade spring 12 thereinto. A pin aperture 41 or 44 is formed integrally with the engagement groove 42. The pin aperture 41 shown in figure 13 is generally a rectangular shaped hole extending in the shoe width direction. The pin aperture 44 shown in figure 14 is generally a round hole extending in the shoe width direction. A wedge-shaped pin 50 is inserted into and releasably engaged with the pin aperture 41. Similarly, the tapered pin 51 is inserted into and releasably engaged with the pin aperture 44.

During maintenance of the blade tensioner in this embodiment, the blade shoe 11 is first moved to a position shown by the double dotted line in figure 1. During this movement of the blade shoe 11, the blade spring 12 is deformed to a greater radius of curvature. Then, the pin 50 or 51 is inserted into a pin aperture 41 or 44 of the blade shoe 11. At this time, the pin 50 or 51 contacts the end of the blade spring 12 in the pin aperture 41 or 44 and acts as a prop to restrict a returning deformation or a deformation to a smaller radius of curvature of the blade spring 12. In such a manner, the chain sliding face 11a of the blade shoe 11 may be easily maintained at a position away from the chain with the blade shoe 11 kept at an extended state.

Figure 15 shows yet another stop mechanism, but the arrangement as shown does not include first and second supporting surfaces as included in embodiments of the invention. An end of a pin 52 protruding toward the blade shoe 11 is fixed on a sidewall surface 56 of an engine part such as an engine cover. One of the side surfaces of the distal end portion 15 of the blade shoe 11 is formed with an inclined surface 43. The inclined surface 43 is inclined in such a manner that the amount of protrusion of the blade shoe 11 increases as it goes along a direction opposite the extended direction of the blade shoe 11, or right hand direction in figure 15. A terminal end of the inclined surface 43 is formed with a stepped portion 62.

During maintenance of the chain in this arrangement, the blade shoe 11 is transferred to the position shown by the double dotted line in figure 1 and a dash-and-dot line in figure 15. During this transfer, the blade shoe 11 moves in a left-hand direction of figure 15 and the distal end of the pin 52 in the engine gradually presses against the inclined surface 43 of the blade shoe 11. At this time, a compressive force is applied to the blade shoe 11 from the pin 52, but in this case, the blade shoe 11 is rotatable around the proximal end portion thereof and the plastic shoe 11 has a certain flexibility, which allows for movement of the distal end portion 15 in a width direction. Thereby, the blade shoe 11 is prevented from being fractured by a compressive force from the pin 52.

When the blade shoe 11 moves to a position away from the chain, the distal end of the pin 52 finally engages with the stepped portion 62 at the terminal end of the inclined surface 43 of the blade shoe 11. In such a manner, the chain sliding face 11a of the blade shoe 11 may be easily maintained at a position away from the chain with the blade shoe 11 kept at an extended state.

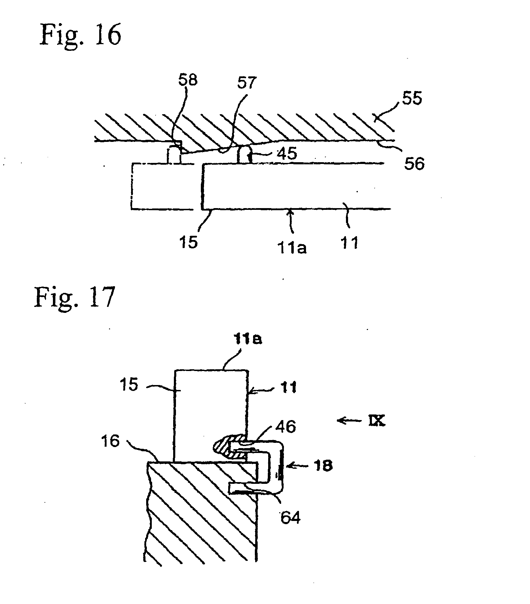

As shown in figure 16, another embodiment of the present invention, an inclined surface 57 is formed on a sidewall surface 56 of an engine part such as an engine cover. The inclined surface 57 is inclined in such a manner that the amount of protrusion of the inclined surface 57 increases as it goes along an extended direction of the blade shoe 11, or left hand direction in figure 16. A terminal end of the inclined surface 57 is formed with a stepped portion 58. On a side surface of the distal end portion 15 of the blade shoe 11, a protrusion 45 is formed that protrudes toward the sidewall surface 56 in the engine.

During maintenance, the blade shoe 11 is transferred to a position shown in by the double dotted line in figure 1 and a dash-and-dot line in figure 16. During this transfer, the blade shoe 11 moves in a left-hand direction of figure 16 and the protrusion 45 gradually presses against the inclined surface 57 in the engine. At this time, a compressive force is counteracted to the blade shoe 11 from the inclined surface 57, but in this case, the blade shoe 11 is rotatable around the proximal end portion thereof and the plastic shoe 11 has a certain flexibility, which allows for movement of the distal end portion 15 in a width direction. Thereby, the blade shoe 11 is prevented from being fractured by a compressive force applied from the inclined surface 57.

When the blade shoe 11 moves to a position away from the chain, the distal end of the protrusion 45 finally engages with the stepped portion 58 at the terminal end of the inclined surface 57 in the engine. In such a manner, the chain sliding face 11a of the blade shoe 11 can be easily maintained at a position away from the chain with the blade shoe 11 kept at an extended state.

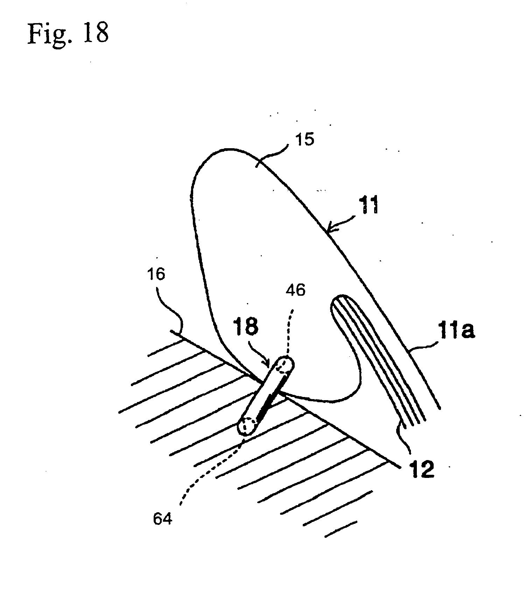

Shown in figures 17 and 18 is another stop arrangement suitable for embodiments of the present invention but the arrangement as illustrated does not embody the invention since it does not include first and second supporting surfaces. A first pin aperture 46 is formed on a side surface of the distal end portion 15 of the blade shoe 11, and a second pin aperture 64 is formed on a sidewall of the supporting surface 16 in the engine. A U-shaped stop pin 18 is releasably engaged with the pin apertures 46 and 64.

During maintenance, the blade shoe 11 is transferred to a position away from the chain, shown by the double dotted line of figure 11. During this transfer, the distal end portion 15 of the blade shoe 11 moves along the supporting surface 16 toward an upward position of a second pin aperture 64, shown in figure 18. From this state, opposite ends of the U-shaped stop pin 18 are inserted into and engaged with the first pin aperture 46 of the distal end portion 15 of the blade shoe 11 and the second pin aperture 64 of the supporting surface 16. Thus, the chain sliding surface 15 of the blade shoe 11 can be easily kept at a position away from the chain with the blade shoe 11 maintained at an elongated state.

In the aforementioned embodiments, an engine of single overhead camshaft type (SOHC) is used, but the present invention can be also applied to an engine of double overhead camshaft type (DOHC). Also, the application of the blade tensioner system of the present invention is not limited to an engine timing system, but this blade tensioner system may be applied to a chain for an auxiliary drive such as an oil pump or the like.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1.    A blade-type tensioner system for a chain (4) that drivingly connects a drive shaft (2) to a driven shaft (3) in an engine comprising:

> a blade-type tensioner (10) comprising:
>
>> a blade shoe (11) having a shoe body with an arcuately curved chain sliding face, a proximal end portion (13) provided on a proximal side of the shoe body, wherein the proximal end portion of the blade shoe is pivotably supported around a supporting shaft (14) inserted into the proximal end portion, and a distal end portion (15) provided on a distal side of the shoe body; and
>> a blade spring (12) for imparting tension to the chain through the blade shoe, the blade spring being positioned on a back side of the chain sliding face of the blade shoe;
>
> a first supporting face provided in the engine so as to slidably support the distal end portion of the blade shoe,
> wherein the distal end portion of the blade shoe has a curved, convex surface (15a; 15b) adapted to contact the first supporting face;
> **characterised in that** a second supporting face (16b) is provided in the engme with the circular, convex surface (15a, 15b) of the blade shoe being slidably supported on the first or second supporting face, the second supporting face (16b) being non-planar with the first supporting face (16a) and the second supporting face (16b) either intersecting the first supporting face(16a) at an obtuse angle or having a circular, concave surface that is continuous with the first supporting face (16a), such that the circular, convex surface (15a; 15b) of the distal end portion contacts the second supporting face (16b) when tension in the chain is increased.

2. The blade-type tensioner system of claim 1, wherein the second supporting face (16b) further comprises a flat surface continuous with the circular, concave surface of the second supporting face.

3. The blade-type tensioner system of claim 1 or 2, wherein the first supporting face (16a) is a flat surface.

4. The blade-type tensioner system of claim 1 or 2, wherein the first supporting face is a circular, convex surface.

5. The blade-type tensioner system of claim 4, wherein a contact point between the first supporting face and the circular, convex surface of the distal end portion of the blade shoe is positioned at an inflection point between the circular, convex surface of the first supporting face and the circular, concave surface of the second supporting face.

6. The blade-type tensioner system of claim 1, wherein the first supporting face (16a) and the second supporting faces (16b) are formed of flat surfaces intersecting each other at an obtuse angle, and the distal end portion includes a first convexly curved portion contacting the first supporting face and a second convexly curved portion contacting the second supporting face.

7. The blade-type tensioner system of claim 6, wherein the first and second convexly curved portions are formed of the same circular arc.

8. The blade-type tensioner system of any one of claims 1 to 7, wherein the proximal end portion (13) and the distal end portion (15) of the blade shoe further comprise engaging grooves (42) formed therein to insert and engage end portions of the blade spring (12), wherein the engaging grooves are formed with a pin hole (41) connected to one of the engaging grooves, such that when a pin (50) is engaged with the pin hole the pin comes into contact with the end of the blade spring (12) thereby restricting returning deformation of the blade spring to maintain an extended condition of the blade spring.

9. The blade-type tensioner system of any one of claims 1 to 7, further comprising a stop mechanism being adapted to locate the chain sliding face of the blade shoe a distance away from the chain during maintenance such that the blade shoe is in an extended position.

10. The blade-type tensioner system of claim 9, wherein the stop mechanism further comprises:

a first pin hole (46) formed on a side surface of the distal end portion of the blade shoe; a second pin hole (64) formed on a side wall of the sliding surface; and a U-shaped stop pin (18) with end portions each releasably engageable with the first and second pin hole.

11. The blade-type tensioner system of claim 9, wherein the stop mechanism further comprises a supporting surface formed with a notch and a stop member having an end portion being releasably engageable with the notch, such that an opposite end portion of the stop member comes into contact with the distal portion of the blade shoe when the stop member is engaged with the notch.

12. The blade-type tensioner system of claim 11, wherein the stop member is leaf-shaped.

13. The blade-type tensioner system of claim 11, wherein the stop member is a pin.

14. The blade-type tensioner system of claim 9, wherein in the stop mechanism further comprising a pin (52) protruding toward a side surface of the distal end portion (15) of the blade shoe (11) fixed to a wall in an engine, the side surface of the distal end portion of the blade shoe having an inclined face (43) formed thereon.

15. The blade-type tensioner system of claim 14, wherein the inclined face (43) is inclined in such a way that a distal end of the pin comes into tighter contact with the inclined surface as the blade shoe deforms to an extended condition and a terminal of the inclined surface has an engaging portion (62) formed thereon, the engaging portion being adapted to be engageable with the distal portion of the pin.

16. The blade-type tensioner system of claim 15, wherein the engaging portion is a stepped portion (62) formed at a terminal of the inclined surface.

17. The blade-type tensioner system of any one of claims 1 to 7, wherein the distal end portion of the blade shoe has a protrusion (45) formed on a side surface thereof, further comprising:

a ramp (57) formed on a wall in the engine, the ramp being inclined in such a way that the protrusion (45) comes into contact with the ramp as the blade shoe deforms to an extended condition; and
a terminal (58) of the ramp formed with an engaged portion adapted to engage the protrusion.

18. The blade-type tensioner system of claim 17, wherein the engaged portion is a stepped portion (58) formed at the terminal of the ramp.

**Patentansprüche**

1. Blatt-Spannsystem für eine Kette (4), die eine Antriebswelle (2) antreibend mit einer angetriebenen Welle (3) in einem Motor verbindet, wobei es umfasst:

   eine Blatt-Spanneinrichtung (10), die umfasst:

   einen Blatt-Schuh (11), der einen Schuh-Körper mit einer bogenförmig gekrümmten Kettengleitfläche, einen proximalen Endabschnitt (13), der an einer proximalen Seite des Schuh-Körpers vorhanden ist, wobei der proximale Endabschnitt des Blatt-Schuhs um eine Tragewelle (14) herum schwenkbar gelagert ist, die in den proximalen Endabschnitt eingeführt ist, und einen distalen Endabschnitt (15) hat, der an einer distalen Seite des Schuh-Körpers vorhanden ist; und
   eine Blatt-Feder (12), die der Kette über den Blatt-Schuh Spannung verleiht, wobei die Blatt-Feder an einer Rückseite der Kettengleitfläche des Blatt-Schuhs angeordnet ist;
   eine erste Tragefläche, die in dem Motor so vorhanden ist, dass sie den distalen Endabschnitt des Blatt-Schuhs verschiebbar trägt,

   wobei der distale Endabschnitt des Blatt-Schuhs eine gekrümmte konvexe Fläche (15a, 15b) hat, die so eingerichtet ist, dass sie mit der ersten Tragefläche in Kontakt kommt;
   **dadurch gekennzeichnet, dass** eine zweite Tragefläche (16b) in dem Motor vorhanden ist, wobei die kreisförmige konvexe Fläche (15a, 15b) des Blatt-Schuhs von der ersten oder der zweiten Tragefläche verschiebbar getragen wird, die zweite Tragefläche (16b) nicht plan zu der ersten Tragefläche (16a) ist und die zweite Tragefläche (16b) eine kreisförmige konkave Fläche hat, die sich an die erste Tragefläche (16a) anschließt, so dass die kreisförmige konvexe Fläche (15a; 15b) des distalen Endabschnitts mit der zweiten Tragefläche (16b) in Kontakt kommt, wenn Spannung in der Kette erhöht wird.

2. Blatt-Spannsystem nach Anspruch 1, wobei die zweite Tragefläche (16b) des Weiteren eine ebene Fläche umfasst, die sich an die kreisförmige konkave Fläche der zweiten Tragefläche anschließt.

3. Blatt-Spannsystem nach Anspruch 1 oder 2, wobei die erste Tragefläche (16a) eine ebene Fläche ist.

4. Blatt-Spannsystem nach Anspruch 1 oder 2, wobei die erste Tragefläche eine kreisförmige konvexe Fläche ist.

5. Blatt-Spannsystem nach Anspruch 4, wobei ein Kontaktpunkt zwischen der ersten Tragefläche und der kreisförmigen konvexen Fläche des distalen Endabschnitts des Blatt-Schuhs an einem Wendepunkt zwischen der kreisförmigen konvexen Fläche der ersten Tragefläche und der kreisförmigen konkaven Fläche der zweiten Tragefläche angeordnet ist.

6. Blatt-Spannsystem nach Anspruch 1, wobei die erste Tragefläche (16a) und die zweite Tragefläche (16b) aus ebenen Flächen bestehen, die einander in einem stumpfen Winkel schneiden, und der distale Endabschnitt einen ersten konvex gekrümmten Abschnitt, der mit der ersten Tragefläche in Kontakt ist, sowie einen zweiten konvex gekrümmten Abschnitt enthält, der mit der zweiten Tragefläche in Kontakt ist.

7. Blatt-Spannsystem nach Anspruch 6, wobei der erste und der zweite konvexe gekrümmte Abschnitt aus ein und demselben Kreisbogen bestehen.

8. Blatt-Spannsystem nach einem der Ansprüche 1 bis 7, wobei der proximale Endabschnitt (13) und der distale Endabschnitt (15) des Blatt-Schuhs des Weiteren darin ausgebildete Eingriffsnuten (42) umfassen, um Endabschnitte der Blatt-Feder (12) einzuführen und Eingriff mit ihnen herzustellen, wobei die Eingriffsnuten mit einem Stiftloch (41) versehen sind, das mit einer der Eingriffsnuten verbunden ist, so dass, wenn ein Stift (50) mit dem Stiftloch in Eingriff gebracht wird, der Stift mit dem Ende der Blatt-Feder (12) in Kontakt kommt, um so Rückstellverformung der Blatt-Feder einzuschränken und einen gedehnten Zustand der Blatt-Feder aufrechtzuerhalten.

9. Blatt-Spannsystem nach einem der Ansprüche 1 bis 7, das des Weiteren einen Anschlagmechanismus umfasst, der so eingerichtet ist, dass er die Kettengleitfläche des Blatt-Schuhs bei Wartung in einem Abstand zu der Kette arretiert, so dass sich der Blatt-Schuh in einer gedehnten Position befindet.

10. Blatt-Spannsystem nach Anspruch 9, wobei der Anschlagmechanismus des Weiteren umfasst:

ein erstes Bolzenloch (46), das an einer Seitenfläche des distalen Endabschnitts des Blatt-Schuhs ausgebildet ist;

ein zweites Bolzenloch (64), das an einer Seitenwand der Gleitfläche ausgebildet ist; und

einen U-förmigen Anschlagstift (18) mit Endabschnitten, die jeweils lösbar mit dem ersten und dem zweiten Stiftloch in Eingriff gebracht werden können.

11. Blatt-Spannsystem nach Anspruch 9, wobei der Anschlagmechanismus des Weiteren eine Tragefläche umfasst, die mit einer Kerbe und einem Anschlagelement versehen ist, das einen Endabschnitt hat, der lösbar mit der Kerbe in Eingriff gebracht werden kann, so dass ein gegenüberliegender Endabschnitt des Anschlagelementes mit dem distalen Abschnitt des Blatt-Schuhs in Kontakt kommt, wenn das Anschlagelement mit der Kerbe in Eingriff gebracht wird.

12. Blatt-Spannsystem nach Anspruch 11, wobei das Anschlagelement blattförmig ist.

13. Blatt-Spannsystem nach Anspruch 11, wobei das Anschlagelement ein Stift ist.

14. Blatt-Spannsystem nach Anspruch 9, wobei der Anschlagmechanismus des Weiteren einen Stift (52) umfasst, der zu einer Seitenfläche des distalen Endabschnitts (15) des Blatt-Schuhs (11) hin vorsteht, der an einer Wand in einem Motor befestigt ist, und die Seitenfläche des distalen Endabschnitts des Blatt-Schuhs eine daran ausgebildete geneigte Fläche (43) aufweist.

15. Blatt-Spannsystem nach Anspruch 14, wobei die geneigte Fläche (43) so geneigt ist, dass ein distales Ende des Stiftes in engeren Kontakt mit der geneigten Fläche kommt, wenn sich der Blatt-Schuh in eine gedehnte Position verformt, ein Abschluss der geneigten Fläche einen daran ausgebildeten Eingriffsabschnitt (62) hat und der Eingriffsabschnitt so eingerichtet ist, dass er mit dem distalen Abschnitt des Stiftes in Eingriff gebracht werden kann.

16. Blatt-Spannsystem nach Anspruch 15, wobei der Eingriffsabschnitt ein abgestufter Abschnitt (62) ist, der an einem Abschluss der geneigten Fläche ausgebildet ist.

17. Blatt-Spannsystem nach einem der Ansprüche 1 bis 7, wobei der distale Endabschnitt des Blatt-Schuhs einen Vorsprung (45) aufweist, der an einer Seitenfläche desselben ausgebildet ist, und es des Weiteren umfasst:

eine Abschrägung (57), die an einer Wand in dem Motor ausgebildet ist, wobei die Abschrägung so geneigt ist, dass der Vorsprung (45) mit der Abschrägung in Kontakt kommt, wenn sich der Blatt-Schuh in einen gedehnten Zustand verformt; und

einen Abschluss (58) der Abschrägung, der mit einem Eingriffsabschnitt versehen ist, der so eingerichtet ist, dass er mit dem Vorsprung in Eingriff kommt.

18. Blatt-Spannsystem nach Anspruch 17, wobei der Eingriffsabschnitt ein abgestufter Abschnitt (58) ist, der am Abschluss der Abschrägung ausgebildet ist.

**Revendications**

1. Système de tendeur du type à lame pour une chaîne (4) qui connecte en entraînement un arbre d'entraînement (2) à un arbre mené dans un moteur comprenant :

un sabot de lame (11) ayant un corps de sabot avec une face de coulissement de chaîne incurvée en forme d'arc, une partie d'extrémité proximale (13) disposée sur un côté proximal du corps de sabot, dans lequel la partie d'extrémité proximale du sabot de lame est supportée en pivotement autour d'un arbre de support (14) insérée dans la partie d'extrémité proximale, et une partie d'extrémité distale (15) disposée sur un côté distal du corps de sabot ; et

un ressort à lame (12) pour communiquer une tension à la chaîne à travers le sabot de lame, le ressort à lame étant positionné sur un côté arrière de la face de coulissement de chaîne du sabot de lame ;

une première face de support disposée dans le moteur de façon à supporter de manière coulissante la partie d'extrémité distale du sabot de lame,

dans lequel la partie d'extrémité distale du sabot de lame présente une surface convexe incurvée (15a ; 15b) adaptée pour contacter la première face de support ;

une seconde face de support (16b) est prévue dans le moteur avec la surface convexe circulaire (15a ; 15b) du sabot de lame étant supporté de manière coulissante sur la première face de support ou sur la seconde face de support, la seconde face de support (16b) étant non planaire avec la première face de support (16a) et la surface convexe circulaire (15a ; 15b) de la partie d'extrémité distale contacte la seconde face de support (16b) lorsque la tension dans la chaîne est accrue ; la seconde face de support (16b) présentant une surface concave circulaire qui est continue avec la première face de support (16a).

2. Système de tendeur du type à lame selon la revendication 1, dans lequel la seconde face de support (16b) comprend, en outre, une surface plate continue avec la surface concave circulaire de la seconde face de support.

3. Système de tendeur du type à lame selon la revendication 1 ou 2, dans lequel la première face de support (16a) est une surface plate.

4. Système de tendeur du type à lame selon la revendication 1 ou 2, dans lequel la première face de support est une surface convexe circulaire.

5. Système de tendeur du type à lame selon la revendication 4, dans lequel un point de contact entre la première face de support et la surface convexe circulaire de la partie d'extrémité distale du sabot de lame est positionné au niveau d'un point d'inflexion entre la surface convexe circulaire de la première face de support et la surface concave circulaire de la seconde face de support.

6. Système de tendeur du type à lame selon la revendication 1, dans lequel la première face de support (16a) et la seconde face de support (16b) sont formées de surfaces plates s'intersectant l'une l'autre selon un angle obtus, et la partie d'extrémité distale inclut une première partie incurvée de manière convexe contactant la première face de support et une seconde partie incurvée de manière convexe contactant la seconde face de support.

7. Système de tendeur du type à lame selon la revendication 6, dans lequel les première et seconde parties incurvées de manière convexe sont formées du même arc circulaire.

8. Système de tendeur du type à lame selon l'une quelconque des revendications 1 à 7, dans lequel la partie d'extrémité proximale (13) et la partie d'extrémité distale (15) du sabot de lame comprennent, en outre, des rainures de mise en prise (42) formées dans celui-ci pour insérer et mettre en prise des parties d'extrémité du ressort à lame (12), dans lequel les rainures de mise en prise sont formées avec un trou pour broche (41) connecté à une des rainures de mise en prise, de sorte que lorsqu'une broche (50) est mise en prise avec le trou pour broche, la broche vient en contact avec l'extrémité du ressort à lame (12), limitant de ce fait la déformation en retour du ressort à lame pour maintenir une condition étendue du ressort à lame.

9. Système de tendeur type à lame selon l'une quelconque des revendications 1 à 7, comprenant, en outre, un mécanisme de butée qui est conçue pour positionner la face de coulissement de la chaîne du sabot de lame à une certaine distance loin de la chaîne pendant l'entretien de sorte que le sabot de lame est dans une position étendue.

10. Système de tendeur du type à lame selon la revendication 9, dans lequel le mécanisme de butée comprend, en outre :

   un premier trou pour broche (46) formé sur une surface latérale de la partie d'extrémité distale du sabot de lame ;
   un second trou pour broche (75) formé sur une paroi latérale de la surface coulissante ; et
   une broche d'arrêt en forme de U (18) avec des parties d'extrémité pouvant être mis en prise de manière libérable avec les premier et second trous pour broche.

11. Système de tendeur du type à lame selon la revendication 9, dans lequel le mécanisme de butée comprend, en outre, une surface de support formée avec une encoche et un élément de butée ayant une partie d'extrémité qui peut être mise en prise de manière libérable avec l'encoche, de sorte qu'une partie d'extrémité opposée de l'élément de butée vient en contact avec la partie distale du sabot de lame lorsque l'élément de butée est mis en prise avec l'encoche.

12. Système de tendeur du type à lame selon la revendication 11, dans lequel l'élément de butée est en forme de lame.

13. Système de tendeur du type à lame selon la revendication 11, dans lequel l'élément de butée est une broche.

14. Système de tendeur du type à lame selon la revendication 9, dans lequel le mécanisme de butée comprend, en outre, une broche (52) dépassant vers une surface latérale de la partie d'extrémité distale (15) du sabot de lame (11) fixée à une paroi dans un moteur, la surface latérale de la partie d'extrémité distale du sabot de lame ayant une surface inclinée (43) formée sur celle-ci.

15. Système de tendeur du type à lame selon la revendication 14, dans lequel la face inclinée (43) est inclinée d'une manière telle qu'une extrémité distale de la broche vient en contact plus serré avec la surface inclinée à mesure que le sabot de lame se déforme à une condition étendue et une terminaison de la surface inclinée comprend une partie de mise en prise (62) formée sur celle-ci, la partie de mise en prise étant adaptée pour être mise en prise avec la partie distale de la broche.

**16.** Système de tendeur du type à lame selon la revendication 15, dans lequel la partie de mise en prise est une partie à gradins (62) formée au niveau d'une terminaison de la surface inclinée.

**17.** Système de tendeur du type à lame selon l'une quelconque des revendications 1 à 7, dans lequel la partie d'extrémité distale du sabot de lame comporte une protubérance (45) formée sur sa surface latérale, comprenant en outre :

une rampe(57) formée sur une paroi dans le moteur, la rampe étant inclinée d'une manière telle que la protubérance (45) vient en contact avec la rampe à mesure que le sabot de lame se déforme à une condition étendue ; et
une terminaison (58) formée avec une partie mise en prise adaptée pour mettre en prise la protubérance.

**18.** Système de tendeur du type à lame selon la revendication 17, dans lequel la partie mise en prise est une partie à gradins (58) formée au niveau de la terminaison de la rampe.

Fig. 1

Fig. 2

Fig. 3

Fig. 4

Fig. 5

Fig. 6

Fig. 7

Fig. 8

Fig. 9

$\theta_0 < \theta_2'$

# Fig. 10

$\theta > \theta_2$

Fig. 11

Fig. 12

Fig. 13

Fig. 14

Fig. 15

Fig. 16

Fig. 17

Fig. 18